# EUROPEAN PATENT SPECIFICATION

(11) **EP 3 648 418 B1**
(45) Date of publication and mention of the grant of the patent: **03.11.2021**
(21) Application number: 19203727.3
(22) Date of filing: 17.10.2019
(51) Int. Cl.: H04L 12/66, H04L 12/841

(54) **METHOD AND SYSTEM FOR OPTIMIZING DATA FLOW BETWEEN DEVICES**
VERFAHREN UND SYSTEM ZUR OPTIMIERUNG DES DATENFLUSSES ZWISCHEN VORRICHTUNGEN
PROCÉDÉ ET SYSTÈME D'OPTIMISATION DE FLUX DE DONNÉES ENTRE DES DISPOSITIFS

(30) Priority: 05.11.2018 US 201816180192
(43) Date of publication of application: 06.05.2020
(73) Proprietor: Danfoss Power Solutions Inc., Ames, IA 50010 (US)
(72) Inventor: BJOERN, Fredrik, 6430 Nordborg (DK); OLESEN, Henrik, 6430 Nordborg (DK)
(74) Representative: Stevens, Brian

(56) References cited:
- EP-A2- 2 651 090
- US-A1- 2010 220 649
- US-A1- 2016 191 385

## Description

### TECHNICAL FIELD

The present invention relates to data communication and, more particularly, to methods and systems for controlling data flow in communications between devices.

### BACKGROUND

In data communication networks, a quantum of data is transferred between physical devices by breaking the quantum of data into a plurality of addressed data packets (i.e. smaller units of data) that are then transmitted and routed over the communication network from the sending device to a receiving device, where they are received and reassembled.

When two physical devices with different latency characteristics are logically connected for data transfer, the quantum of data must be divided into packets that do not exceed the maximum packet size of either connected device.
This means that the least capable device determines the size of the packets during the data transfer. Additionally, in order to send each new data packet, the sending device must first await an acknowledgement from the receiving device of receipt of the previous packet before it is allowed to send the new packet. As a result of these factors, the throughput of the data transfer suffers and, on a high latency link, the time between transmissions of two consecutive packets can be considerable. Thus, the data transfer is inefficient.
D1 US 2016/191385 A1 (LOPEZ CARLOS VALENCIA) discloses a method provided for managing fragmentation of packets for content object retrieval at a content centric networking (CCN) gateway in a CCN network. The method includes receiving a first CCN interest packet including a name for a first content object from a user equipment in an access network, storing a fragmentation stream identifier in a header of the first CCN interest packet, and setting a path minimum maximum transmission unit (MTU) in the first CCN interest packet to an MTU value required by a link between the CCN gateway and a node forwarding the first CCN interest packet to the CCN gateway. The method further includes forwarding the first CCN interest packet with updated fragmentation stream identifier and path minimum MTU toward a content provider, receiving a set of packets of including fragments of the first content object from the content provider, reassembling and verifying the first content object from the set of packets, and refragmenting the first content object to minimum MTU of the access network and storing the refragmented first content object in the content store. The first content object is then returned to the user equipment in the access network.
D2 EP 2 651 090 A2 (CITRIX SYSTEMS INC) discloses systems and methods for a method for improving compression history matches by removing application layer protocol headers from compression history data. In one embodiment, these systems and method include transmitting, between a first device and a second device, an application data stream, the application data stream comprising at least one application layer protocol header between a first sequence of application data and a second sequence of application data. The first device identifies the first sequence and the second sequence from the application data stream and determines that a combined sequence comprising the first sequence and the second sequence matches a portion of a compression history.
D3 US 2010/220649 A 1 (SAKAI TOSHIKI) discloses a system wherein, if a packet received from a communication terminal is larger in size than a maximum transmission unit used between a wireless base station and a gateway apparatus and also if it cannot be fragmented, an echo request packet of a size not larger than the maximum transmission unit is generated and transmitted to the gateway apparatus. Thereafter, if an echo reply packet corresponding to the echo request packet is received from the gateway apparatus, an ICMP data packet including the value of the maximum transmission unit is generated and transmitted to the communication terminal.

### SUMMARY

The invention is defined by the appended claims. According to the present disclosure, a system for transmitting data between a first device and a second device that overcomes the inefficiencies described above is disclosed. The system comprises a first network having a first latency characteristic defining a first packet size for data transmission over the first network, wherein the first device is operating on the first network, and a second network having a second latency characteristic defining a second packet size for data transmission over the second network, wherein the second device is operating on the second network. The system further comprises a gateway intermediate the first network and second network. The gateway is configured to intercept data transmissions sent from the first device to the second device in the first packet size, to convert the data transmissions from the first packet size to the second packet size, and to deliver the data transmissions to the second device in the second packet size.

According to the present disclosure, the gateway may be further configured to intercept data transmissions sent from the second device to the first device in the second packet size, to convert the data transmissions from the second packet size to the first packet size, and to deliver the data transmissions to the first device in the first packet size.

According to the present disclosure, the first packet size and second packet size may be different. The first packet size may be smaller or larger than the second packet size.

According to the present disclosure, a method for transmitting data between a first device operating on a first network and a second device operating on a second network is disclosed. The method comprises intercepting, at a gateway intermediate the first network and the second network, a data transmission sent from the first device to the second device in a first packet size. The method further comprises converting the data transmission from the first packet size to a second packet size at the gateway, and delivering, from the gateway, the converted data transmission to the second device in the second packet size.

According to the present disclosure, the method may include converting data transmissions wherein the first packet size and second packet size are different. The first packet size may be smaller or larger than the second packet size.

According to the present disclosure, converting the data transmission from the first packet size to the second packet size may comprise splitting each packet of the first packet size into multiple packets of the second packet size.

According to the present disclosure, converting the data transmission from the first packet size to the second packet size may comprise combining multiple packets of the first packet size into a singe packet of the second packet size.

According to the present disclosure, the method for transmitting data between the first device operating on the first network and the second device operating on the second network, further comprises receiving, at the gateway, a request from the first device for a maximum packet size available to the second device, forwarding, from the gateway to the second device, the request for the maximum packet size available to the second device, receiving, at the gateway, a response from the second device indicating that the maximum packet size available to the second device is the second packet size, and sending, from the gateway to the first device, a response indicating that the maximum packet size available to the second device is the first packet size rather than the second packet size.

According to the present disclosure, delivering the converted data transmissions to the second device in the second packet size from the gateway may comprise sending a first portion of the data transmission to the second device as a first packet of the second packet size, receiving, at the gateway, confirmation that the first packet has been received by the second device, and repeating the sending and receiving steps with subsequent portions of the data transmission until the entire data transmission has been received by the second device.

According to the present disclosure, the method may further comprise transmitting, from the gateway to the first device, an indication that the data transmission is complete after the entire data transmission has been received by the second device.

According to the present disclosure, a computer program product residing on a computer readable medium has a plurality of instructions stored thereon which, when executed by a processor of a gateway operatively connecting a first network and a second network, causes the processor to perform operations comprising intercepting, at the gateway, a data transmission sent in a first packet size from a first device on the first network to a second device on the second network, converting, at the gateway, the data transmission from the first packet size to a second packet size, and delivering, from the gateway, the converted data transmission to the second device in the second packet size.

According to the present disclosure, the computer program product may include instructions for converting data transmissions wherein the first packet size and second packet size are different. The first packet size may be smaller or larger than the second packet size.

According to the present disclosure, the computer program product may further comprise instructions for converting the data transmission from the first packet size to the second packet size by splitting each packet of the first packet size into multiple packets of the second packet size.

According to the present disclosure, the computer program product may further comprise instructions for converting the data transmission from the first packet size to the second packet size by combining multiple packets of the first packet size into a singe packet of the second packet size.

According to the present disclosure, the computer program product further comprises instructions for: receiving, at the gateway, a request from the first device for a maximum packet size available to the second device, forwarding, from the gateway to the second device, the request for the maximum packet size available to the second device, receiving, at the gateway, a response from the second device indicating that the maximum packet size available to the second device is the second packet size, and sending, from the gateway to the first device, a response indicating that the maximum packet size available to the second device is the first packet size.

According to the present disclosure, the instructions for delivering the converted data transmissions to the second device in the second packet size from the gateway may further comprise instructions for sending, from the gateway, a first portion of the data transmission to the second device as a first packet of the second packet size, receiving, at the gateway, confirmation that the first packet has been received by the second device, and repeating the sending and receiving steps with subsequent portions of the data transmission until the entire data transmission has been received by the second device.

According to the present disclosure, the computer program product may further comprise instructions for transmitting, from the gateway to the first device, an indication that the data transmission is complete after the entire data transmission has been received by the second device.

These and other objects, features and advantages of the present disclosure will become apparent in light of the detailed description of embodiments thereof, as illustrated in the accompanying drawings.

### BRIEF DESCRIPTION OF THE DRAWINGS

FIG. 1 is a schematic diagram of a system for optimizing data transfer according to the present disclosure; and
FIG. 2 is a flowchart showing a method for providing improved data throughput between connected devices in the system of FIG. 1.

### DETAILED DESCRIPTION

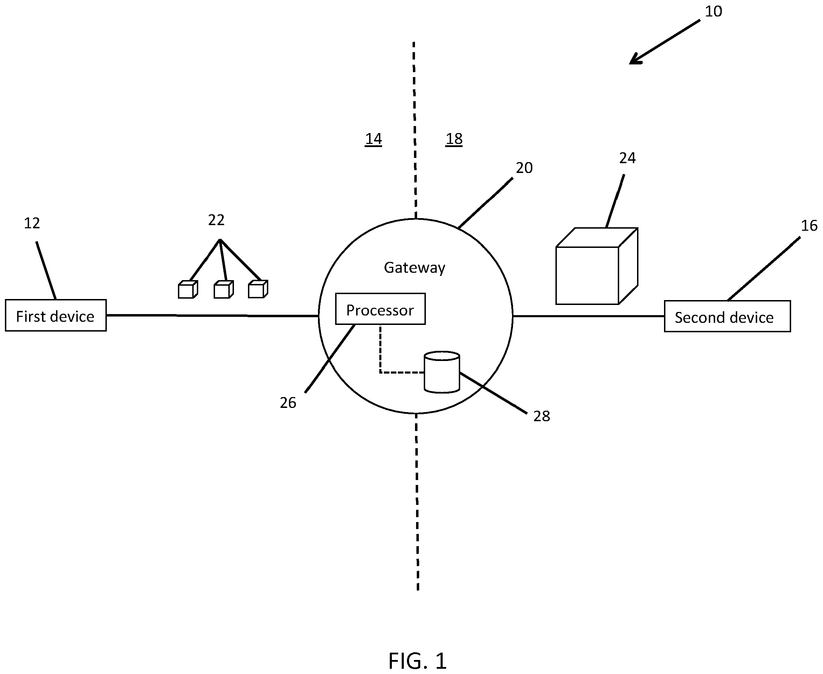

With reference to FIG. 1, a system 10 according to the present disclosure is shown. The system 10 includes a first device 12 operating on a first network 14, a second device 16 operating on a second network 18, and a gateway 20 connecting the first network 14 and the second network 18. Each of the first network 14 and the second network 18 is optimized for either low latency and low memory usage or high latency and higher memory usage. Data transfer over any network is typically optimized for either low latency and low memory usage or high latency and higher memory usage depending at least in part on memory capabilities of the physical devices on the network. The physical devices may be, for example, electronic control units (ECUs) and various devices associated therewith, such as controllers, displays, valves, and/or other similar controlling or controlled components.

For exemplary purposes, the present disclosure describes the first network 14 as a low latency network and describes the second network 18 as a high latency network. For example, the first network 14 may be a vehicle control system that transfers data over short geographical distances and includes network components having low memory usage capabilities. The vehicle control system may include, for example, propulsion controllers, braking controllers, safety systems, and various other systems and subsystems operatively connected to one another over a Controller Area Network (CAN or CAN bus) or other similar network that allows the various control systems, controllers, subsystems, and the like to communicate with one another using CAN or other communication protocols known in the art. The second network 18 may a network that transfers data over long geographical distances, such as the Internet, and relies on network components having high memory usage capabilities. Since the first network 14 is optimized for low latency, the first network 14 is configured to transfer data using small data packets 22 so as not to exceed the low memory capabilities of the system components. Conversely since the second network 18 is optimized for high latency, the second network 18 is configured to transfer data using large data packets 24, which can be supported by the high memory capabilities of the system components.

Although the present disclosure describes the first network 14 as a low latency network and the second network 18 as a high latency network, it should be readily apparent that the first network 14 may instead be a high latency network and/or the second network 18 may instead be a low latency network.

The gateway 20 serves as an interface between the first network 14 and the second network 18 to transfer data therebetween. For example, the gateway 20 may form part of the first network 14 and may be operatively connectable to the second network 18 through, for example, a wired or wireless communication connection or the like, to allow data transfer between the first network 14 and the second network 18. Similarly, the gateway 20 may form part of the second network 18 and may be operatively connectable to the first network 14 through, for example, a wired or wireless communication connection or the like, to allow data transfer between the first network 14 and the second network 18.

Alternatively, the gateway 20 may be a standalone component operatively connectable to both the first network 14 and second network 18 through a wired or wireless communication connection or the like, to allow data transfer between the first network 14 and the second network 18. The gateway 20 masquerades the data transfer capabilities of the first network 14 and second network 18 when data is being transferred between the first device 12 operating on the first network 14 and the second device 16 operating on the second network 18 to improve data throughput between the devices as described below. For instance, some devices such as some valves may only support a packet size up to 50 bytes, while some controllers and/or displays may support packet sizes over 1000 bytes. The gateway 20 masquerades the data transfer capabilities of all of these devices by responding to transfer capability requests with an artificially high value such as 65000 bytes or more.

The gateway 20 includes all of the necessary electronics, software, memory, storage, databases, firmware, logic/state machines, microprocessors, communication links, and any other input/output interfaces to perform the functions described herein and/or to achieve the results described herein. For example, the gateway 20 may include, or be in communication with, one or more processors 26 and memory 28, which may include system memory, including random access memory (RAM) and read-only memory (ROM). Suitable computer program code may be provided to the gateway 20 for executing numerous functions, including those discussed herein in connection with improving data throughput between the first device 12 operating on the first network 14 and the second device 16 operating on the second network 18.

The one or more processors 26 may include one or more conventional microprocessors and may also include one or more supplementary co-processors such as math co-processors or the like. The one or more processors 26 may be configured to communicate with other networks, such as the first network 14 and second network 18, and/or devices, such as the first device 16 and second device 18, as well as various other servers, processors, computers, smartphones, tablets and/or the like.

The one or more processors 26 may be in communication with the memory 28, which may comprise magnetic, optical and/or semiconductor memory, such as, for example, random access memory ("RAM"), read only memory ("ROM"), flash memory, optical memory, or a hard disk drive memory. Memory 28 may store any data and/or information typically found in computing devices, including an operating system, and/or one or more other programs (e.g., computer program code and/or a computer program product) that are stored in a non-transitory memory portion and adapted to direct the gateway 20 and system 10 to perform according to the various embodiments discussed herein. The gateway 20 and control logic and/or portions thereof, and/or any other programs may be stored, for example, in a compressed format, an uncompiled and/or an encrypted format, and may include computer program code executable by the one or more processors 26. The executable instructions of the computer program code may be read into a main memory of the one or more processors 26 from a non-transitory computer-readable medium other than the memory 28. While execution of sequences of instructions in the program causes the one or more processors 26 to perform the process steps described herein, hard-wired circuitry may be used in place of, or in combination with, executable software instructions for implementation of the processes of the present invention. Thus, embodiments of the present invention are not limited to any specific combination of hardware and software.

For example, the methods and systems discussed herein and portions thereof may also be implemented in programmable hardware devices such as field programmable gate arrays, programmable array logic, programmable logic devices or the like. Programs may also be implemented in software for execution by various types of computer processors. A program of executable code may, for instance, comprise one or more physical or logical blocks of computer instructions, which may, for instance, be organized as an object, procedure, process or function. Nevertheless, the executables of an identified program need not be physically located together, but may comprise separate instructions stored in different locations which, when joined logically together, comprise the program and achieve the stated purpose for the programs such as providing workflow analysis. In an embodiment, an application of executable code may be a compilation of many instructions, which may be distributed over several different code partitions or segments, among different programs, and across several devices.

The term "computer-readable medium" as used herein refers to any medium that provides or participates in providing instructions and/or data to the one or more processors of the system 10, including the gateway 20, (or any other processor of a device described herein) for execution. Such a medium may take many forms, including but not limited to, non-volatile media or memory and volatile memory. Non-volatile memory may include, for example, optical, magnetic, or opto-magnetic disks, or other non-transitory memory. Volatile memory may include dynamic random access memory (DRAM), which typically constitutes the main memory or other transitory memory.

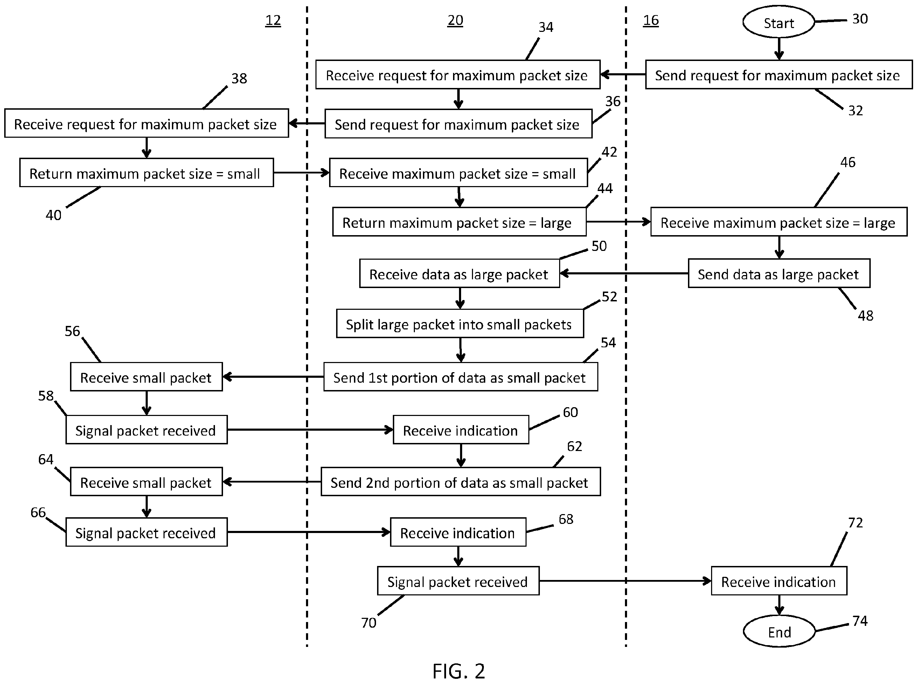

Referring to FIG. 2, a method and system for data transfer between the first device 12 and second device 16 through the gateway 20 according to the present disclosure is shown. The first device 12 and second device 16 are operatively connected to one another through the gateway 20, but neither the first device 12 nor the second device 16 is aware that the gateway 20 is between the two devices. In the example shown, a quantum of data is being transferred from the second device 16, which supports large packet sizes, to the first device 12, which only supports small packet sizes. However, it should be readily apparent that the same method and system is applicable to data transfers from the first device 12 to the second device 16.

The data transfer from the second device 16 to the first device 12 is initiated at step 30. At step 32, the second device 16 sends a request to the first device 12 asking for the maximum packet size supported by the first device 12. This request is intercepted by the gateway 20 at step 34. At step 36, the gateway 20 forwards the request to the first device 12 without modification. At step 38, the first device 12 receives the request asking for the maximum packet size supported by the first device. At step 40, the first device 12 responds with the maximum packet size that it supports, which is illustrated as a "small" packet size in the exemplary embodiment of FIG. 2. This response is intercepted by the gateway 20 at step 42. At step 44, the gateway 20 replaces the maximum packet size returned by the first device 12 with a larger value of maximum packet size, such as the size supported by the second device 16, and returns the larger packet size to the second device 16. The packet size returned from the gateway 20 to the second device 16 is illustrated as "large" in the example shown in FIG. 2. The second device 16 receives this indication of packet size from the gateway 20 at step 46.

At step 48, the second device 16 then transmits the quantum of data to the first device 12. Due to the modification of the maximum packet size information by the gateway 20 at step 44, the second device 16 uses a packet size the exceeds the capabilities of the first device 12 when sending the quantum of data at step 48. At step 50, the gateway 20 intercepts the packet of data being sent from the second device 16 to the first device 12. The gateway 20 knows the actual maximum packet size of the first device 12 since the gateway 20 received the actual maximum packet size of the first device 12 at step 42. Thus, using the actual maximum packet size of the first device 12, at step 52, the gateway 20 splits the large packet of data received from the second device 16 into multiple smaller packets. The actual number of smaller packets that the gateway 20 splits the large packet into depends on a ratio between the size of the actual maximum packet size of first device 12 and the actual packet size of the large packet sent by the second device 16. For exemplary purposes, FIG. 2 illustrates the large packet of data sent by the second device 16 being split into two smaller packets of data by the gateway 20. At step 54, the gateway 20 transmits a first portion of the large packet of data received from the second device 16 to the first device 12 as a first small packet. At step 56, the first device 12 receives the first small packet from the gateway 20 and, at step 58, the first device 12 sends a signal indicating that the first small packet has been received. At step 60, the gateway 20 intercepts the indication from the first device 12 confirming receipt of the first small packet. At step 62, the gateway 20 then transmits a second portion of the large packet of data received from the second device 16 to the first device 12 as a second small packet. At step 64, the first device 12 receives the second small packet from the gateway 20 and, at step 66, the first device 12 sends a signal indicating that the second small packet has been received. At step 68, the gateway 20 intercepts the indication from the first device 12 confirming receipt of the second small packet. Then, at step 70, the gateway sends a signal to the second device 16 indicating that the transfer of the large packet of data that the second device 16 initiated has been completed. The second device 16 receives this indication at step 72. Then, if additional large packets of data are necessary to for transmission of the quantum of data, the second device 16 transmits another large packet of data to the first device 12 through the gateway 20 in the same manner described in connection with steps 48 though 72. Alternatively, the second device 16 ends the transfer at step 74.

Although the exemplary implementation of the system and method of the present disclosure shown in FIG. 2 describes the gateway 20 splitting a large data packet received from the second device 16 over the high latency link into multiple small packets sent to the first device 12 over the low latency link, it should be readily apparent from the present disclosure that the gateway 20 may instead receive multiple small packets from a transmitting device over the low latency link and may combine the multiple small packets into one or more large packets for transmission to a receiving device over the high latency link.

The system and method of the present disclosure advantageously improves data throughput by positioning the gateway 20 intermediate the first device 12 and second device 16 to masquerading the capability of the end device receiving the data, which is the first device 12 in the illustrative example described above. In doing so, the system and method of the present disclosure reduces the number of packets transmitted from the second device 16 over the high latency second network 18, while still allowing data packets of the appropriate smaller size to be transmitted to the first device 12 over the low latency first network 14. Thus, data throughput between the first and second devices is advantageously improved.

While various embodiments have been described in the present disclosure, it will be appreciated by those of ordinary skill in the art that modifications can be made to the various embodiments without departing from the scope of the invention which is defined by the appended claims. Accordingly, the particular embodiments described in this specification are to be taken as merely illustrative and not limiting.

## Claims

1. A system (10) for transmitting data between a first device (12) and a second device (16), the system
comprising:
a first network (14) having a first latency characteristic defining a first packet size for data transmission over the first network (14), the first device (12) operating on the first network (14);
a second network (18) having a second latency characteristic defining a second packet size for data transmission over the second network, the second device (16) operating on the second network (18); and
a gateway (20) intermediate between the first network (14) and second network (18);
wherein the gateway (20) is configured
to intercept data transmissions sent from the first device (12) to the
second device (16) in the first packet size, to convert the data transmissions from the first packet size to
the second packet size, and to deliver the data transmissions to the second device (16) in the second packet size wherein
the gateway (20) is further configured to receive a request from the first device (12) for a maximum packet size available to the second device (16), to forward the request for the maximum packet size available to the second device (16) unaltered from how the request was received from the first device (12), to receive a response from the second device (16) indicating that the maximum packet size available to the second device (16) is a second packet size, to send to the first device (12) a response indicating that the maximum packet size available to the second device (16) is a first packet size .

2. The system (10) according to claim 1, the gateway (20) is further configured to intercept data transmissions sent from the second device (16) to the first device (12) in the second packet size, to convert the data transmissions from the second packet size to the first packet size, and to deliver the data transmissions to the first device (12) in the first packet size.

3. The system (10) according to claim 1, wherein the first packet size and second packet size are different.

4. A method for transmitting data between a first device (12) operating on a first network (14), the first network (14) having a first latency characteristic defining a first packet size for data transmission over the first network (14) and a
second device (16) operating on a second network (18), the second network (18) having a second latency characteristic defining a second packet size for data transmission over the second network, the second device (16) operating on the second network (18); the method comprising:
intercepting, at a gateway (20) intermediate between the first network (14) and the second network (18), a data transmission sent from the first device (12) to the second device (16) in a first packet size;
converting the data transmission from the first packet size to a second packet size at the gateway (20); and
delivering, from the gateway (20), the converted data transmission to the second device (16) in the second packet size, the method further comprising:
receiving, at the gateway (20), a request from the first device (12) for a maximum packet size available to the second device (16);
forwarding, from the gateway (20) to the second device (16), the request for the maximum packet size available to the second device (16) unaltered from how the request was received from the first device (12);
receiving, at the gateway (20), a response from the second device (16) indicating that the maximum packet size available to the second device (16) is the second packet size; and
sending, from the gateway (20) to the first device (12), a response indicating that the maximum packet size available to the second device is the first packet size.

5. The method according to claim 4, wherein the first packet size and second packet size are different.

6. The method according to claim 4, wherein converting the data transmission from the first packet size to the second packet size comprises splitting each packet of the first packet size into multiple packets of the second packet size.

7. The method according to claim 4, wherein converting the data transmission from the first packet size to the second packet size comprises combining multiple packets of the first packet size into a single packet of the second packet size.

8. The method according to claim 4, wherein delivering the converted data transmissions to the second device (16) in the second packet size from the gateway (20) comprises:
sending, from the gateway (20), a first portion of the data transmission to the second device (16) as a first packet of the second packet size;
receiving, at the gateway (20), confirmation that the first packet has been received by the second
device (16); and repeating the sending and receiving steps with subsequent portions of the data transmission
until the entire data transmission has been received by the second device (16).

9. The method according to claim 8, further comprising:
transmitting, from the gateway (20) to the first device (12), an indication that the data transmission is complete after the entire data transmission has been received by the second device (16).

10. A computer program product residing on a computer readable medium having a plurality of instructions stored thereon which, when executed by a processor of a gateway (20) operatively connecting a first network (14), the first network (14) having a first latency characteristic defining a first packet size for data
transmission over the first network (14) and a second network (18), the second network (18) having a second latency characteristic defining a second packet size for data transmission over the second network (18), cause the processor to perform operations
comprising:
intercepting, at the gateway (20), a data transmission sent in a first packet size from a first device (12)
on the first network to a second device (16) on the second network (18);
converting, at the gateway (20), the data transmission from the first packet size to a second packet size; and
delivering, from the gateway (20), the converted data transmission to the second device (16) in the second packet size **characterised in** the computer program further comprising:
receiving, at the gateway (20), a request from the first device (12) for a maximum packet size available to the second device (16);
forwarding, from the gateway (20) to the second device (16), the request for the maximum packet size available to the second device (16) unaltered from how the request was received from the first device (12);
receiving, at the gateway (20), a response from the second device (16) indicating that the maximum packet size available to the second device (16) is the second packet size; and
sending, from the gateway (20) to the first device (12), a response indicating that the maximum packet size available to the second device (16) is the first packet size.

11. The computer program product according to claim 10, further comprising instructions for converting the data transmission from the first packet size to the second packet size by splitting each packet of the first packet size into multiple packets of the second packet size or by combining multiple packets of the first packet size into a single packet of the second packet size.

12. The computer program product according to claim 10, further comprising instructions for:
transmitting, from the gateway (20) to the first device (12), an indication that the data transmission is complete after the entire data transmission has been received by the second device (16).

## Patentansprüche

1. System (10) zum Übertragen von Daten zwischen einer ersten Vorrichtung (12) und einer zweiten Vorrichtung (16), wobei das System Folgendes umfasst:
ein erstes Netzwerk (14) mit einer ersten Latenzcharakteristik, die eine erste Paketgröße für die Datenübertragung über das erste Netzwerk (14) definiert, wobei die erste Vorrichtung (12) auf dem ersten Netzwerk (14) arbeitet;
ein zweites Netzwerk (18) mit einer zweiten Latenzcharakteristik, die eine zweite Paketgröße für die Datenübertragung über das zweite Netzwerk definiert, wobei die zweite Vorrichtung (16) auf dem zweiten Netzwerk (18) arbeitet; und
ein Gateway (20) zwischen dem ersten Netzwerk (14) und dem zweiten Netzwerk (18);
wobei das Gateway (20) für Folgendes ausgebildet ist:
Abfangen von Datenübertragungen, die von der ersten Vorrichtung (12) zur zweiten Vorrichtung (16) in der ersten Paketgröße gesendet werden, Umwandeln der Datenübertragungen von der ersten Paketgröße in die zweite Paketgröße, und Liefern der Datenübertragungen an die zweite Vorrichtung (16) in der zweiten Paketgröße,
wobei das Gateway (20) ferner für Folgendes ausgebildet ist:
Empfangen einer Anfrage von der ersten Vorrichtung (12) nach einer maximalen Paketgröße, die für die zweite Vorrichtung (16) verfügbar ist, Weiterleiten der Anfrage nach der maximalen Paketgröße, die für die zweite Vorrichtung (16) verfügbar ist, und zwar unverändert dazu, wie die Anfrage von der ersten Vorrichtung (12) empfangen wurde, Empfangen einer Antwort von der zweiten Vorrichtung (16), die angibt, dass die maximale Paketgröße, die für die zweite Vorrichtung (16) verfügbar ist, eine zweite Paketgröße ist, Senden, an die erste Vorrichtung (12), einer Antwort, die angibt, dass die maximale Paketgröße, die für die zweite Vorrichtung (16) verfügbar ist, eine erste Paketgröße ist.

2. System (10) gemäß Anspruch 1, wobei das Gateway (20) ferner für Folgendes ausgebildet ist:
Abfangen von Datenübertragungen, die von der zweiten Vorrichtung (16) zur ersten Vorrichtung (12) in der zweiten Paketgröße gesendet werden, Umwandeln der Datenübertragungen von der zweiten Paketgröße in die erste Paketgröße, und Liefern der Datenübertragungen an die erste Vorrichtung (12) in der ersten Paketgröße.

3. System (10) gemäß Anspruch 1, wobei die erste Paketgröße und die zweite Paketgröße unterschiedlich sind.

4. Verfahren zur Übertragung von Daten zwischen einer ersten Vorrichtung (12), die in einem ersten Netzwerk (14) arbeitet, wobei das erste Netzwerk (14) eine erste Latenzcharakteristik aufweist, die eine erste Paketgröße für die Datenübertragung über das erste Netzwerk (14) definiert, und einer zweiten Vorrichtung (16), die in einem zweiten Netzwerk (18) arbeitet, wobei das zweite Netzwerk (18) eine zweite Latenzcharakteristik aufweist, die eine zweite Paketgröße für die Datenübertragung über das zweite Netzwerk definiert, wobei die zweite Vorrichtung (16) in dem zweiten Netzwerk (18) arbeitet;
wobei das Verfahren Folgendes umfasst:
Abfangen, an einem Gateway (20) zwischen dem ersten Netzwerk (14) und dem zweiten Netzwerk (18),
einer Datenübertragung, die von der ersten Vorrichtung (12) zur zweiten Vorrichtung (16) in einer ersten Paketgröße gesendet wird;
Umwandeln der Datenübertragung von der ersten Paketgröße in eine zweite Paketgröße am Gateway (20); und
Liefern, vom Gateway (20), der umgewandelten Datenübertragung an die zweite Vorrichtung (16) in der zweiten Paketgröße, wobei das Verfahren ferner Folgendes umfasst:
Empfangen, am Gateway (20), einer Anfrage von der ersten Vorrichtung (12) nach einer maximalen Paketgröße, die für die zweite Vorrichtung (16) verfügbar ist;
Weiterleiten, vom Gateway (20) zur zweiten Vorrichtung (16), der Anfrage nach der maximalen Paketgröße, die für die zweite Vorrichtung (16) verfügbar ist, und zwar unverändert dazu, wie die Anfrage von der ersten Vorrichtung (12) empfangen wurde;
Empfangen, am Gateway (20), einer Antwort von der zweiten Vorrichtung (16), die angibt, dass die maximale Paketgröße, die für die zweite Vorrichtung (16) verfügbar ist, die zweite Paketgröße ist; und
Senden, vom Gateway (20) zur ersten Vorrichtung (12), einer Antwort, die angibt, dass die maximale Paketgröße, die für die zweite Vorrichtung verfügbar ist, die erste Paketgröße ist.

5. Verfahren gemäß Anspruch 4, wobei die erste Paketgröße und die zweite Paketgröße unterschiedlich sind.

6. Verfahren gemäß Anspruch 4, wobei das Umwandeln der Datenübertragung von der ersten Paketgröße in die zweite Paketgröße das Aufteilen jedes Pakets der ersten Paketgröße in mehrere Pakete der zweiten Paketgröße umfasst.

7. Verfahren gemäß Anspruch 4, wobei das Umwandeln der Datenübertragung von der ersten Paketgröße in die zweite Paketgröße das Kombinieren mehrerer Pakete der ersten Paketgröße zu einem einzigen Paket der zweiten Paketgröße umfasst.

8. Verfahren gemäß Anspruch 4, wobei die Lieferung der umgewandelten Datenübertragungen an die zweite Vorrichtung (16) in der zweiten Paketgröße vom Gateway (20) Folgendes umfasst:
Senden, vom Gateway (20), eines ersten Teils der Datenübertragung an die zweite Vorrichtung (16) als ein erstes Paket der zweiten Paketgröße;
Empfangen, am Gateway (20), der Bestätigung, dass das erste Paket durch die zweite Vorrichtung (16) empfangen worden ist; und Wiederholen der Sende- und Empfangsschritte mit nachfolgenden Teilen der Datenübertragung, bis die gesamte Datenübertragung durch die zweite Vorrichtung (16) empfangen worden ist.

9. Verfahren gemäß Anspruch 8, das ferner Folgendes umfasst:
Übertragen, vom Gateway (20) zur ersten Vorrichtung (12), einer Anzeige, dass die Datenübertragung abgeschlossen ist, nachdem die gesamte Datenübertragung durch die zweite Vorrichtung (16) empfangen worden ist.

10. Computerprogrammprodukt, das sich auf einem computerlesbaren Medium befindet, auf dem eine Vielzahl von Anweisungen gespeichert sind, die, wenn sie von einem Prozessor eines Gateways (20) ausgeführt werden, das betriebsfähig ein erstes Netzwerk (14) verbindet, wobei das erste Netzwerk (14) eine erste Latenzcharakteristik aufweist, die eine erste Paketgröße für die Datenübertragung über das erste Netzwerk (14) definiert, und ein zweites Netzwerk (18), wobei das zweite Netzwerk (18) eine zweite Latenzcharakteristik aufweist, die eine zweite Paketgröße für die Datenübertragung über das zweite Netzwerk (18) definiert, den Prozessor veranlassen, Operationen durchzuführen, die Folgendes umfassen:
Abfangen, am Gateway (20), einer Datenübertragung, die in einer ersten Paketgröße von einer ersten Vorrichtung (12) im ersten Netzwerk zu einer zweiten Vorrichtung (16) im zweiten Netzwerk (18) gesendet wird;
Umwandeln, am Gateway (20), der Datenübertragung von der ersten Paketgröße in eine zweite Paketgröße; und
Liefern, vom Gateway (20), der umgewandelten Datenübertragung in der zweiten Paketgröße an die zweite Vorrichtung (16), **dadurch gekennzeichnet, dass** das Computerprogramm ferner Folgendes umfasst:
Empfangen, am Gateway (20), einer Anfrage von der ersten Vorrichtung (12) nach einer maximalen Paketgröße, die für die zweite Vorrichtung (16) verfügbar ist;
Weiterleiten, vom Gateway (20) zur zweiten Vorrichtung (16), der Anfrage nach der maximalen Paketgröße, die für die zweite Vorrichtung (16) verfügbar ist, und zwar unverändert dazu, wie die Anfrage von der ersten Vorrichtung (12) empfangen wurde;
Empfangen, am Gateway (20), einer Antwort von der zweiten Vorrichtung (16), die angibt, dass die maximale Paketgröße, die für die zweite Vorrichtung (16) verfügbar ist, die zweite Paketgröße ist; und
Senden, vom Gateway (20) zur ersten Vorrichtung (12), einer Antwort, die angibt, dass die maximale Paketgröße, die für die zweite Vorrichtung (16) verfügbar ist, die erste Paketgröße ist.

11. Computerprogrammprodukt gemäß Anspruch 10, das ferner Anweisungen zur Umwandlung der Datenübertragung von der ersten Paketgröße in die zweite Paketgröße aufweist, indem jedes Paket der ersten Paketgröße in mehrere Pakete der zweiten Paketgröße aufgeteilt wird oder, indem mehrere Pakete der ersten Paketgröße zu einem einzigen Paket der zweiten Paketgröße kombiniert werden.

12. Computerprogrammprodukt gemäß Anspruch 10, das ferner Anweisungen für Folgendes aufweist:
Übertragen, vom Gateway (20) zur ersten Vorrichtung (12), einer Anzeige, dass die Datenübertragung abgeschlossen ist, nachdem die gesamte Datenübertragung durch die zweite Vorrichtung (16) empfangen worden ist.

## Revendications

1. Système (10) de transmission de données entre un premier dispositif (12) et un second dispositif (16), le système comportant :
un premier réseau (14) présentant une première caractéristique de latence définissant une première taille de paquets pour la transmission de données sur le premier réseau (14), le premier dispositif (12) fonctionnant sur le premier réseau (14) ;
un second réseau (18) présentant une seconde caractéristique de latence définissant une seconde taille de paquets pour la transmission de données sur le second réseau, le second dispositif (16) fonctionnant sur le second réseau (18) ; et
une passerelle (20) intercalée entre le premier réseau (14) et le second réseau (18) ;
la passerelle (20) étant configurée pour intercepter des transmissions de données envoyées du premier dispositif (12) au second dispositif (16) dans la première taille de paquets, pour convertir les transmissions de données de la première taille de paquets à la seconde taille de paquets, et pour remettre les transmissions de données au second dispositif (16) dans la seconde taille de paquets, la passerelle (20) étant en outre configurée pour recevoir une demande provenant du premier dispositif (12) concernant une taille maximum de paquets à la disposition du second dispositif (16), pour transférer la demande de taille maximum de paquets à la disposition du second dispositif (16) inchangée par rapport à la façon dont la demande a été reçue en provenance du premier dispositif (12), pour recevoir une réponse provenant du second dispositif (16) indiquant que la taille maximum de paquets à la disposition du second dispositif (16) est une seconde taille de paquets, pour envoyer au premier dispositif (12) une réponse indiquant que la taille maximum de paquets à la disposition du second dispositif (16) est une première taille de paquets.

2. Système (10) selon la revendication 1, la passerelle (20) étant en outre configurée pour intercepter des transmissions de données envoyées du second dispositif (16) au premier dispositif (12) dans la seconde taille de paquets, pour convertir les transmissions de données de la seconde taille de paquets à la première taille de paquets, et pour remettre les transmissions de données au premier dispositif (12) dans la première taille de paquets.

3. Système (10) selon la revendication 1, la première taille de paquets et la seconde taille de paquets étant différentes.

4. Procédé de transmission de données entre un premier dispositif (12) fonctionnant sur un premier réseau (14), le premier réseau (14) présentant une première caractéristique de latence définissant une première taille de paquets pour la transmission de données sur le premier réseau (14) et un second dispositif (16) fonctionnant sur un second réseau (18), le second réseau (18) présentant une seconde caractéristique de latence définissant une seconde taille de paquets pour la transmission de données sur le second réseau, le second dispositif (16) fonctionnant sur le second réseau (18) ;
le procédé comportant les étapes consistant à :
intercepter, au niveau d'une passerelle (20) intercalée entre le premier réseau (14) et le second réseau (18), une transmission de données envoyée du premier dispositif (12) au second dispositif (16) dans une première taille de paquets ;
convertir la transmission de données de la première taille de paquets à une seconde taille de paquets au niveau de la passerelle (20) ; et
remettre, à partir de la passerelle (20), la transmission de données convertie au second dispositif (16) dans la seconde taille de paquets, le procédé comportant en outre les étapes consistant à :
recevoir, au niveau de la passerelle (20), une demande provenant du premier dispositif (12) concernant une taille maximum de paquets à la disposition du second dispositif (16) ;
transférer, de la passerelle (20) au second dispositif (16), la demande de taille maximum de paquets à la disposition du second dispositif (16) inchangée par rapport à la façon dont la demande a été reçue en provenance du premier dispositif (12) ;
recevoir, au niveau de la passerelle (20), une réponse provenant du second dispositif (16) indiquant que la taille maximum de paquets à la disposition du second dispositif (16) est la seconde taille de paquets ; et envoyer, de la passerelle (20) au premier dispositif (12), une réponse indiquant que la taille maximum de paquets à la disposition du second dispositif est la première taille de paquets.

5. Procédé selon la revendication 4, la première taille de paquets et la seconde taille de paquets étant différentes.

6. Procédé selon la revendication 4, la conversion de la transmission de données de la première taille de paquets à la seconde taille de paquets comportant la division de chaque paquet de la première taille de paquets en multiples paquets de la seconde taille de paquets.

7. Procédé selon la revendication 4, la conversion de la transmission de données de la première taille de paquets à la seconde taille de paquets comportant la combinaison de multiples paquets de la première taille de paquets en un seul paquet de la seconde taille de paquets.

8. Procédé selon la revendication 4, la remise des transmissions de données converties au second dispositif (16) dans la seconde taille de paquets à partir de la passerelle (20) comportant les étapes consistant à :
envoyer, à partir de la passerelle (20), une première partie de la transmission de données au second dispositif (16) en tant que premier paquet de la seconde taille de paquets ;
recevoir, au niveau de la passerelle (20), la confirmation du fait que le premier paquet a été reçu par le second dispositif (16) ; et
répéter les étapes d'envoi et de réception avec des parties suivantes de la transmission de données jusqu'à ce que la totalité de la transmission de données ait été reçue par le second dispositif (16).

9. Procédé selon la revendication 8, comportant en outre l'étape consistant à :
transmettre, de la passerelle (20) au premier dispositif (12), une indication du fait que la transmission de données est terminée après que la totalité de la transmission de données a été reçue par le second dispositif (16).

10. Produit de programme d'ordinateur résidant sur un support lisible par ordinateur sur lequel est stockée une pluralité d'instructions qui, lorsqu'elles sont exécutées par un processeur d'une passerelle (20) reliant fonctionnellement un premier réseau (14), le premier réseau (14) présentant une première caractéristique de latence définissant une première taille de paquets pour la transmission de données sur le premier réseau (14) et un second réseau (18), le second réseau (18) présentant une seconde caractéristique de latence définissant une seconde taille de paquets pour la transmission de données sur le second réseau (18), amènent le processeur à effectuer des opérations comportant celles consistant à :
intercepter, au niveau de la passerelle (20), une transmission de données envoyée dans une première taille de paquets d'un premier dispositif (12) sur le premier réseau à un second dispositif (16) sur le second réseau (18) ;
convertir, au niveau de la passerelle (20), la transmission de données de la première taille de paquets à une seconde taille de paquets ; et
remettre, à partir de la passerelle (20), la transmission de données convertie au second dispositif (16) dans la seconde taille de paquets, **caractérisé en ce que** le programme d'ordinateur comporte en outre les étapes consistant à :
recevoir, au niveau de la passerelle (20), une demande provenant du premier dispositif (12) concernant une taille maximum de paquets à la disposition du second dispositif (16) ;
transférer, de la passerelle (20) au second dispositif (16), la demande de taille maximum de paquets à la disposition du second dispositif (16) inchangée par rapport à la façon dont la demande a été reçue en provenance du premier dispositif (12) ;
recevoir, au niveau de la passerelle (20), une réponse provenant du second dispositif (16) indiquant que la taille maximum de paquets à la disposition du second dispositif (16) est la seconde taille de paquets ; et envoyer, de la passerelle (20) au premier dispositif (12), une réponse indiquant que la taille maximum de paquets à la disposition du second dispositif (16) est la première taille de paquets.

11. Produit de programme d'ordinateur selon la revendication 10, comportant en outre des instructions pour convertir la transmission de données de la première taille de paquets à la seconde taille de paquets en divisant chaque paquet de la première taille de paquets en multiples paquets de la seconde taille de paquets ou en combinant de multiples paquets de la première taille de paquets en un seul paquet de la seconde taille de paquets.

12. Produit de programme d'ordinateur selon la revendication 10, comportant en outre des instructions pour :
transmettre, de la passerelle (20) au premier dispositif (12), une indication du fait que la transmission de données est terminée après que la totalité de la transmission de données a été reçue par le second dispositif (16).
